(19) Europäisches Patentamt
European Patent Office
Office européen des brevets

(11) EP 4 625 722 A1

(12) EUROPEAN PATENT APPLICATION
published in accordance with Art. 153(4) EPC

(43) Date of publication:
**01.10.2025 Bulletin 2025/40**

(21) Application number: **23910696.6**

(22) Date of filing: **27.12.2023**

(51) International Patent Classification (IPC):
***H01R 25/16*** (2006.01) ***H01R 31/08*** (2006.01)
***H01B 5/02*** (2006.01)

(52) Cooperative Patent Classification (CPC):
**H01B 5/02; B60R 16/02; B60R 16/03;** H01B 5/006; H02G 5/00

(86) International application number:
**PCT/CN2023/142267**

(87) International publication number:
**WO 2024/140777 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.12.2022 CN 202211730874**

(71) Applicant: **BYD Company Limited**
**Shenzhen, Guangdong 518118 (CN)**

(72) Inventors:
- **ZHU, Liang**
  **Shenzhen, Guangdong 518118 (CN)**
- **GUO, Qiang**
  **Shenzhen, Guangdong 518118 (CN)**
- **WEN, Danhua**
  **Shenzhen, Guangdong 518118 (CN)**

(74) Representative: **Taor, Simon Edward William et al**
**Venner Shipley LLP**
**200 Aldersgate**
**London EC1A 4HD (GB)**

# (54) CONDUCTIVE ROD, CONDUCTIVE ROD ASSEMBLY, ELECTRICAL SYSTEM, AND VEHICLE

(57) A conductive rod, including a conductive rod body, wherein the diameter of the conductive rod body satisfies formula (1), wherein $\delta$ is the diameter of the conductive rod body, and the unit thereof is mm; L is the length of the conductive rod body, and the unit thereof is mm; E is the elastic modulus of the conductive rod body, and the unit thereof is Gpa; and $\mu$ is 0.5 $Gpa^{1/4}$.

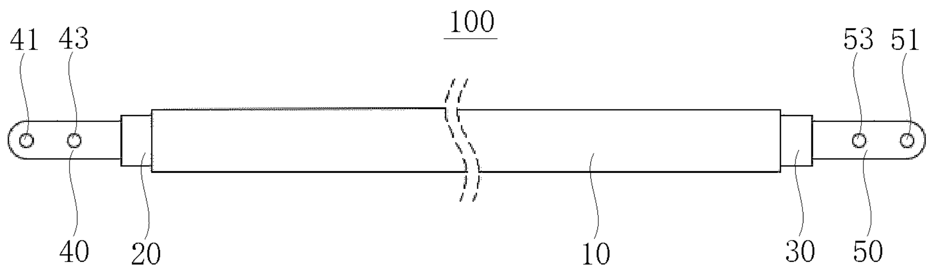


FIG.1

EP 4 625 722 A1

## Description

### CROSS-REFERENCE TO RELATED DISCLOSURES

The present disclosure claims priority to Chinese Patent Disclosure No. 202211730874.3 entitled "CONDUCTIVE ROD, CONDUCTIVE ROD ASSEMBLY, ELECTRICAL SYSTEM, AND VEHICLE" filed on December 30, 2022, which is incorporated herein by reference in its entirety.

### FIELD

The present disclosure relates to the technical field of electrical systems of vehicles, and in particular to a conductive rod, a conductive rod assembly including the conductive rod, an electrical system including the conductive rod assembly and a vehicle including the electrical system.

### BACKGROUND

In a vehicle, both ends of a conductive rod are configured to be fixed to different electrical devices to achieve the electrical connection of the different electrical devices and provide electrical distribution and power for the vehicle during operation.

The vehicle needs to pass through different vibrating road conditions during driving, and the conductive rod also vibrates accordingly. In the prior art, because the ratio of the diameter, length and elastic modulus of the conductive rod is not optimal, a large stress can occur in the vibrating conductive rod, and lead to loosening, deformation and even damage of the conductive rod.

Therefore, how to achieve the optimal ratio of the diameter, length and elastic modulus of the conductive rod is problem that a person skilled in art needs to solve.

### SUMMARY

In view of the shortcomings of the above technology, the purpose of the present disclosure is to provide a conductive rod, a conductive rod assembly including the conductive rod, an electrical system including the conductive rod assembly and a vehicle including the electrical system, and it aims to solve the problem of the large stress in the vibrating conductive rod caused by the suboptimal ratio of the diameter, length, and elastic modulus of the conductive rod in the prior art.

To solve the above problem, the present disclosure provides a conductive rod including a conductive rod body, and the diameter of the conductive rod body satisfies: $\mu^2 L/\sqrt{\pi E} \leq \delta \leq 2\left(1 + \mu^2 L/\sqrt{\pi E}\right)$, wherein $\delta$ is the diameter of the conductive rod body, and the unit thereof is mm; L is the length of the conductive rod body, and the unit thereof is mm; E is the elastic modulus of the conductive rod body, and the unit thereof is Gpa; and $\mu$ is 0.5 $Gpa^{1/4}$.

In summary, the embodiment of the present disclosure provides the conductive rod including the conductive rod body, and the diameter of the conductive rod body satisfies: $\mu^2 L/\sqrt{\pi E} \leq \delta \leq 2\left(1 + \mu^2 L/\sqrt{\pi E}\right)$, wherein $\delta$ is the diameter of the conductive rod body, L is the length of the conductive rod body, E is the elastic modulus of the conductive rod body, and $\mu$ is 0.5 $Gpa^{1/4}$. Therefore, according to the above formula, the ratio of the diameter, length and elastic modulus of the conductive rod is in the optimal range, so that the stress in the vibrating conductive rod is smaller, and the torque attenuation of the fixing assembly for fixing the conductive rod is also smaller.

In an exemplary embodiment, the conductive rod further includes a first transition section, a second transition section, a first connection section and a second connection section, the first transition section and the second transition section are respectively connected to the opposite ends of the conductive rod body, the first connection section is connected to the end of the first transition section facing away from the conductive rod body and the second connection section is connected to the end of the second transition section facing away from the conductive rod body. The cross-sectional area of the first transition section is between the cross-sectional area of the first connection section and the cross-sectional area of the conductive rod body, and the cross-sectional area of the second transition section is between the cross-sectional area of the second connection section and the cross-sectional area of the conductive rod body.

In an exemplary embodiment, a first connection hole is arranged in the end of the first connection section facing away from the first transition section, a second connection hole is arranged in the end of the second connection section facing away from the second transition section, the first connection hole is configured to fix the first connection section to an electrical device and the second connection hole is configured to fix the second connection section to another electrical device.

In an exemplary embodiment, the end surface of the first connection section facing away from the first transition section is a curved surface and the end surface of the second connection section facing away from the second transition section is a curved surface.

In an exemplary embodiment, a first positioning hole is arranged in the first connection section, a second positioning hole is arranged in the second connection section, the first positioning hole is configured to position the first connection section with an electrical device and the second positioning hole is configured to position the second connection section with another electrical device.

In an exemplary embodiment, the conductive rod body, the first transition section, the second transition section, the first connection section and second connection section are integrally formed.

In an exemplary embodiment, the conductive rod further includes a bonding layer and a strengthening layer, the bonding layer is arranged on the surface of the conductive rod body, the surface of the first transition section, the surface of the second transition section, the surface of the first connection section and the surface of the second connection section, the strengthening layer is arranged on the outer surface of the bonding layer, and the bonding layer is configured to bond the conductive rod body with the strengthening layer, the first transition section with the strengthening layer, the second transition section with the strengthening layer, the first connection section with the strengthening layer and the second connection section with the strengthening layer.

In an exemplary embodiment, the bonding layer and the strengthening layer are exposed through the first positioning hole and the second positioning hole.

In an exemplary embodiment, the surface roughness of the outer surface of the strengthening layer is less than or equal to 1.6 and the Vickers hardness of the strengthening layer is greater than 38.

In an exemplary embodiment, the conductive rod further includes an insulating layer, the insulating layer is arranged on the partial peripheral side of the strengthening layer, the insulating layer is exposed from the area where the first connection hole is located and the insulating layer is exposed from the area where the second connection hole is located.

In an exemplary embodiment, the conductive rod further includes a shielding layer, the shielding layer is arranged on the peripheral side of the insulating layer, and the shielding layer is configured to shield a magnetic field.

In an exemplary embodiment, the conductive rod body includes a plurality of conductive sections and at least one bending section, and the at least one bending section is alternately connected with the plurality of conductive sections in sequence.

In an exemplary embodiment, the material of the conductive rod includes 0.02 to 0.85% by weight of magnesium, 0.01 to 0.41% by weight of silicon, 0.01 to 0.04% by weight of boron, 0.01 to 0.07% by weight of iron and 98.59 to 99.95% by weight of aluminum.

In an exemplary embodiment, the total weight ratio of magnesium, silicon, boron, iron and aluminum is greater than 99.9%.

In an exemplary embodiment, the material of the conductive rod includes Al3Fe and AlSiFe.

In an exemplary embodiment, $\mu^2 L/\sqrt{\pi E} \leq \delta \leq 2\left(1 + \mu^2 L/\sqrt{\pi E}\right)$ is obtained on the basis of a Design of Experiments.

In an exemplary embodiment, the elastic modulus of the conductive rod body ranges from 55 Gpa to 120 Gpa.

Based on the same inventive concept, the present disclosure also provides a conductive rod assembly, the conductive rod assembly includes a connection structure and a plurality of conductive rods as described above, and the plurality of conductive rods are fixed to the connection structure.

In summary, the embodiment of the present disclosure provides the conductive rod assembly including the connection structure and the conductive rod, the conductive rod includes the conductive rod body, and the diameter of the conductive rod body satisfies $\mu^2 L/\sqrt{\pi E} \leq \delta \leq 2\left(1 + \mu^2 L/\sqrt{\pi E}\right)$, wherein δ is the diameter of the conductive rod body, and the unit thereof is mm; L is the length of the conductive rod body, and the unit thereof is mm; E is the elastic modulus of the conductive rod body, and the unit thereof is Gpa; and μ is 0.5 $Gpa^{1/4}$. Therefore, according to the above formula, the ratio of the diameter, length and elastic modulus of the conductive rod is in the optimal range, so that the stress in the vibrating conductive rod is smaller, the torque attenuation of the fixing assembly for fixing the conductive rod is also smaller, and the conductive rod meets long-term vibration working conditions while avoiding detachment or breakage due to vibration during operation. It ensures that the conductive rod assembly formed by the conductive rod is reliable and durable, and further ensures that the vehicle has a longer driving mileage on the actual road condition.

Based on the same inventive concept, the present disclosure also provides an electrical system, the electrical system includes a plurality of electrical devices and the conductive rod assembly as described above, the two ends of the conductive rod of the conductive rod assembly are fixed to different electrical devices and electrically connected, respectively.

In summary, the embodiment of the present disclosure provides the electrical system including the electrical device and the conductive rod assembly, the conductive rod assembly includes the connection structure and the conductive rod, the conductive rod includes the conductive rod body, and the diameter of the conductive rod body satisfies $\mu^2 L/\sqrt{\pi E} \leq \delta \leq 2\left(1 + \mu^2 L/\sqrt{\pi E}\right)$, wherein $\delta$ is the diameter of the conductive rod body, and the unit thereof is mm; L is the length of the conductive rod body, and the unit thereof is mm; E is the elastic modulus of the conductive rod body, and the unit thereof is Gpa; and $\mu$ is 0.5 $Gpa^{1/4}$. Therefore, according to the above formula, the ratio of the diameter, length and elastic modulus of the conductive rod is in the optimal range, so that the stress in the vibrating conductive rod is smaller, and the torque attenuation of the fixing assembly for fixing the conductive rod is also smaller, and the conductive rod meets long-term vibration working conditions while avoiding detachment or breakage due to vibration during operation. It ensures that the conductive rod assembly formed by the conductive rod is reliable and durable, and further ensures that the vehicle has a longer driving mileage on the actual road condition.

Based on the same inventive concept, the present disclosure also provides a vehicle including a vehicle body and the electrical system as described above, and the electrical system is located in the vehicle body.

In summary, the embodiment of the present disclosure provides the vehicle including the vehicle body and the electrical system, the electrical system includes the electrical device and the conductive rod assembly, the conductive rod assembly includes the connection structure and the conductive rod, the conductive rod includes the conductive rod body, and the diameter of the conductive rod body satisfies $\mu^2 L/\sqrt{\pi E} \leq \delta \leq 2\left(1 + \mu^2 L/\sqrt{\pi E}\right)$, wherein $\delta$ is the diameter of the conductive rod body, and the unit thereof is mm; L is the length of the conductive rod body, and the unit thereof is mm; E is the elastic modulus of the conductive rod body, and the unit thereof is Gpa; and $\mu$ is 0.5 $Gpa^{1/4}$. Therefore, according to the above formula, the ratio of the diameter, length and elastic modulus of the conductive rod is in the optimal range, so that the stress in the vibrating conductive rod is smaller, and the torque attenuation of the fixing assembly for fixing the conductive rod is also smaller, and the conductive rod meets long-term vibration working conditions while avoiding detachment or breakage due to vibration during operation. It ensures that the conductive rod assembly formed by the conductive rod is reliable and durable, and further ensures that the vehicle has a longer driving mileage on the actual road condition.

## BRIEF DESCRIPTION OF THE DRAWINGS

In order to more clearly illustrate the technical solutions in the embodiments of the present disclosure, the drawings required to be used in the embodiments will be briefly described, and it is obvious that the drawings in the following description are some embodiments of the present disclosure and that other drawings can be derived from these drawings without an inventive effort for a person skilled in the art.

FIG. 1 is a schematic top view of a first structure of a conductive rod disclosed in an embodiment of the present disclosure;
FIG. 2 is a schematic front view of a first structure of a conductive rod disclosed in an embodiment of the present disclosure;
FIG. 3 is a stress contour of the simulation test of the first test group disclosed in an embodiment of the present disclosure;
FIG. 4 is a stress contour of the simulation test of the second test group disclosed in an embodiment of the present disclosure;
FIG. 5 is a stress contour of the simulation test of the third test group disclosed in an embodiment of the present disclosure;
FIG. 6 is a stress contour of the simulation test of the fourth test group disclosed in an embodiment of the present disclosure;

FIG. 7 is a stress contour of the simulation test of the fifth test group disclosed in an embodiment of the present disclosure;
FIG. 8 is a stress contour of the simulation test of the sixth test group disclosed in an embodiment of the present disclosure;
FIG. 9 is a schematic top view of a second structure of a conductive rod disclosed in an embodiment of the present disclosure;
FIG. 10 is a schematic top view of a third structure of a conductive rod disclosed in an embodiment of the present disclosure;
FIG. 11 is a schematic cross-sectional view of the conductive rod in FIG. 10 in the XI-XI direction;
FIG. 12 is a structure diagram of a conductive rod assembly disclosed in an embodiment of the present disclosure;
FIG. 13 is a structure diagram of an electrical system disclosed in an embodiment of the present disclosure;
FIG. 14 is a structure diagram of a vehicle disclosed in an embodiment of the present disclosure.

Description of Reference numbers:

10-conductive rod body; 11-conductive section; 13-bending section; 20-first transition section; 30-second transition section; 40-first connection section; 41-first connection hole; 43-first positioning hole; 50-second connection section; 51-second connection hole; 53-second positioning hole; 70-bonding layer; 80-strengthening layer; 90-insulating layer; 100-conductive rod; 100a-conductive rod; 100b-conductive rod; 110-shielding layer; 200-connection structure; 300-conductive rod assembly; 400-electrical device; 500-electrical system; 700-vehicle body; 800-vehicle.

## DETAILED DESCRIPTION

Exemplary embodiments will be described herein in detail, and examples are represented in the drawings. When referring to the drawings, unless otherwise indicated, the same numbers in different drawings represent the same or similar elements. The embodiments described in the following exemplary embodiments do not represent all embodiments consistent with the present disclosure. On the contrary, they are only examples of devices and methods consistent with some aspects of the present disclosure as described in the appended claims.

The following description of the embodiments refers to the drawings to illustrate specific embodiments that can be implemented in the present disclosure. The serial numbers of components herein, such as "first", "second", etc., are only used to distinguish the described objects and do not have any order or technical meaning. The terms "connection" and "coupling" mentioned in the present disclosure include both direct and indirect connections (couplings) unless otherwise specified. The directional terms mentioned in the present disclosure, such as "up", "down", "front", "back", "left", "right", "inside", "outside", "side", etc., are only with reference to the directions in the accompanying drawings. Therefore, the directional terms used are for better and clearer explanation and understanding of the present disclosure, and do not indicate or imply that the device or component referred to must have a specific orientation, be constructed and operated in a specific orientation, and therefore cannot be understood as a limit of the present disclosure.

In the description of the present disclosure, it should be noted that unless otherwise specified and limited, the terms "mount", "connect", and "connection" should be broadly understood, for example, can be fixedly connected, removably connected, or integrally connected; can be a mechanical connection; can be directly connected, also can be indirectly connected through an intermediate medium, and can be an internal communication of two elements. For a person skilled in the art, the specific meanings of the above terms in the present disclosure can be understood in specific situations. It should be noted that the terms "first", "second", etc. in the description, claims and drawings of the present disclosure are used to distinguish the different objects rather than to describe a particular order. Further, the terms "include", "may include", "contain" or "may contain" used in the present disclosure indicate the presence of corresponding functions, operations, elements, etc. disclosed, and do not limit the other one or more additional functions, operations, elements, etc.. The term "include" or "contain" indicates the presence of corresponding features, numbers, steps, operations, elements, components, or combinations thereof disclosed in the description, and does not exclude the presence or addition of one or more other features, numbers, steps, operations, elements, components, or combinations thereof, with the intention of covering a non-exclusive inclusion.

Depending on the context, the words "if" as used herein can be interpreted as "at" or "when" or "in response to determination" or "in response to detection". Similarly, depending on the context, the phrases "if it is determined" or "if (a stated condition or event) is detected" can be interpreted as "when it is determined" or "in response to determination" or "when (a stated condition or event) is detected " or "in response to detection of (a stated condition or event)".

In the following description, suffixes such as "module," "component," or "unit" used to represent an element are only used to facilitate the description of the present disclosure and do not have a specific meaning. Therefore, "module," "component," or "unit" can be used in a mixed manner.

Unless otherwise defined, all technical and scientific terms used herein have the same meaning as commonly understood by a person skilled in the art. The terms used herein in the description of the present disclosure are for the purpose of describing specific embodiments only and are not intended to limit the present disclosure.

In a vehicle, both ends of a conductive rod are configured to fix to different electrical devices to achieve the electrical connection of the different electrical devices to provide electrical distribution and power for the vehicle to operate. The vehicle needs to pass through different vibrating road conditions during driving, and the conductive rod also vibrates accordingly. In the prior art, because the ratio of the diameter, length and elastic modulus of the conductive rod is not optimal, a large stress can occur in the vibrating conductive rod, and lead to loosening, deformation and even damage of the conductive rod.

Therefore, the purpose of the present disclosure is to provide a conductive rod, a conductive rod assembly including the conductive rod, an electrical system including the conductive rod assembly and a vehicle including the electrical system, and it aims to solve the problem of the large stress in the vibrating conductive rod caused by the suboptimal ratio of the diameter, length, and elastic modulus of the conductive rod in the prior art.

Referring to FIGS. 1 and 2, FIG. 1 is a schematic top view of a first structure of a conductive rod disclosed in an embodiment of the present disclosure, and FIG. 2 is a schematic front view of a first structure of a conductive rod disclosed in an embodiment of the present disclosure. A conductive rod 100 provided by the embodiment of the present disclosure includes a conductive rod body 10, and the diameter of the conductive rod body10 satisfies:

$$\mu^2 L/\sqrt{\pi E} \leq \delta \leq 2\left(1 + \mu^2 L/\sqrt{\pi E}\right) \quad (1)$$

wherein $\delta$ is the diameter of the conductive rod body 10, and the unit thereof is mm (millimeter); L is the length of the conductive rod body 10, and the unit thereof is mm; E is the elastic modulus of the conductive rod body 10, and the unit thereof is Gpa (gigapascal); and $\mu$ is 0.5 $Gpa^{1/4.}$

In an embodiment of the present disclosure, the diameter $\delta$ of the conductive rod body 10 can be

$$\mu^2 L/\sqrt{\pi E},\ \mu^2 L/\sqrt{\pi E} + 1,\ \mu^2 L/\sqrt{\pi E} + 2,\ 2\mu^2 L/\sqrt{\pi E} + 1,\ 2\left(1 + \mu^2 L/\sqrt{\pi E}\right),$$

or other values, which is not specifically limited herein.

In an exemplary embodiment, due to the material and the process used to form the conductive rod body 10, the elastic modulus E of the conductive rod body 10 is in the range of [55 Gpa, 120 Gpa], for example, 55 Gpa, 62 Gpa, 69 Gpa, 73 Gpa, 85 Gpa, 92 Gpa, 100 Gpa, 107 Gpa, 116 Gpa, 120 Gpa, or other values, which is not specifically limited herein.

In an exemplary embodiment, $\mu^2 L/\sqrt{\pi E} \leq \delta \leq 2\left(1 + \mu^2 L/\sqrt{\pi E}\right)$ can be obtained on the basis of a Design of Experiments (DOE). The Design of Experiments includes an Orthogonal Design of Experiments, a Regression Orthogonal Design of Experiments, and a Response Surface Methodology.

In an embodiment of the present disclosure, the conductive rod 100 further includes a first transition section 20, a second transition section 30, a first connection section 40 and a second connection section 50. The first transition section 20 and the second transition section 30 are respectively connected to the opposite ends of the conductive rod body 10, i.e., the first transition section 20 is connected to one end of the conductive rod body 10, and the second transition section 30 is connected to the opposite end of the conductive rod body 10. The first connection section 40 is connected to the end of the first transition section 20 facing away from the conductive rod body 10 and the second connection section 50 is connected to the end of the second transition section 30 facing away from the conductive rod body 10, i.e., the first transition section 20 is connected between the first connection section 40 and the conductive rod body 10, and the second transition section 30 is connected between the second connection section 50 and the conductive rod body 10. The first connection section 40 and the second connection section 50 are configured to be connected to different electrical devices to achieve the electrical connection of the conductive rod 100 with different electrical devices.

It will be appreciated that since the first connection section 40 is connected to the electrical device, the size of the first connection section 40 is smaller, i.e., the cross-sectional area of the first connection section 40 is smaller than the cross-sectional area of the conductive rod body 10. In order to avoid the sudden change in cross-sectional area of the conductive rod 100 caused by the direct connection of the first connecting section 40 to the conductive rod body 10, a larger stress concentration may occur at the location of the sudden change in cross-sectional area. The first transition section 20 is arranged between the conductive rod body 10 and the first connection section 40, the cross-sectional area of the first transition section 20 is between the cross-sectional area of the first connection section 40 and the cross-sectional area of the conductive rod body 10, the sudden change in cross-sectional area of the conductive rod 100 is avoided, and the stress concentration at the location of the change in cross-sectional area is reduced. Similarly, the cross-sectional area of the second transition section 30 is between the cross-sectional area of the second connection section 50 and the cross-sectional area of the conductive rod body 10, and the related functions of the second transition section 30 and the second connection section 50 are referred to the above description, and will not be repeated here. The cross section is a plane perpendicular to the axis of the conductive rod 100.

In an exemplary embodiment, the conductive rod body 10, the first transition section 20, the second transition section 30, the first connection section 40 and the second connection section 50 are integrally formed. The conductive rod 100 can be formed by integral molding, which is beneficial for improving the mounting accuracy of the conductive rod 100.

In an exemplary embodiment, the overall shape of the conductive rod body 10 can be cylindrical, and the cross section of the conductive rod body 10 can be circular. The overall shapes of the first transition section 20 and the second transition section 30 can be cylindrical, and the cross sections of the first transition section 20 and the second transition section 30 can be circular. The overall shapes of the first connection section 40 and the second connection section 50 can be a sheet-like structure, and the cross sections of the first connection section 40 and the second connection section 50 can be rectangular.

It will be appreciated that the overall shapes of the first connection section 40 and the second connection section 50 are designed as sheet-like structures in order to facilitate the contact of the first connection section 40 with the electrical device and the contact of the second connection section 50 with the electrical device.

As shown in FIGS. 1 and 2, in an embodiment of the present disclosure, a first connection hole 41 is arranged in the end of the first connection section 40 facing away from the first transition section 20, a second connection hole 51 is arranged in the end of the second connection section 50 facing away from the second transition section 30. Through the cooperation of the first connection hole 41 with a fixing assembly to fix the first connection section 40 to the electrical device, and through the cooperation of the second connection hole 51 with a fixing assembly to fix the second connection section 50 to the electrical device. It will be appreciated that the mounting and dismounting of the conductive rod 100 are facilitated by the cooperation of the first connection hole 41 with the fixing assembly and the cooperation of the second connection hole 51 with the fixing assembly.

In an exemplary embodiment, the fixing assembly may include a bolt and a nut.

In an exemplary embodiment, the end surface of the first connection section 40 facing away from the first transition section 20 is a curved surface and the end surface of second connection section 50 facing away from the second transition section 30 is a curved surface.

In an exemplary embodiment, a first positioning hole 43 is arranged in the first connection section 40, a second positioning hole 53 is arranged in the second connection section 50, the first positioning hole 43 facilitates the positioning of the first connection section 40 with an electrical device and the second positioning hole 53 facilitates the positioning of the second connection section 50 with another electrical device, while the first positioning hole 43 and the second positioning hole 53 are also configured to fix the conductive rod 100 to different electrical devices.

In an embodiment of the present disclosure, the stress in the conductive rod 100 is affected by various factors, such as the expansion coefficient of the conductive rod body 10, the aging temperature of the conductive rod body 10 (i.e., the temperature at which the conductive rod body 10 vibrates), the aging time (i.e., the duration of vibration of the conductive rod body 10), and the elastic modulus E of the conductive rod body 10.Therefore, the present disclosure selects the factors that most significantly affect the stress in the conductive rod body 10 through Design of Experiments (DOE).

In the present disclosure, simulation tests are performed on the conductive rod 100 shown in FIG. 1 to obtain a stress contour of the conductive rod 100. The specific test method for the simulation test is that the parameters of the conductive rod 100 and the parameters of the vibration simulation test are introduced into the finite element analysis element to perform the simulation test on the conductive rod 100, wherein the working conditions of the vibration simulation test are that: the vibration broadband frequency ranges from 10 Hz to 1000 Hz, the vibration power spectral density ranges from 0.2 $(m/s^2)^2/Hz$ to 30 $(m/s^2)^2/Hz$, the root mean square (RMS) of the vibration velocity is 27.8 $m/s^2$. The relationship between the influencing factors such as expansion coefficient, aging temperature, aging time and elastic modulus E and the maximum stress of the conductive rod 100 is studied through a large number of test data, and the statistics of some of the test results are shown in Tables 1 to 4.

Table 1 Relationship between Expansion Coefficient Factor and Maximum Stress of Conductive Rod

| Sample Number | Length of Conductive Rod Body (L/mm) | Diameter of Conductive Rod Body (δ/mm) | Expansion coefficient μm/m·°C | Stress (MPa) |
|---|---|---|---|---|
| Z210031a | 600 | 15 | 17.5 | 92.4 |
| Z210031b | | | 23.6 | 92.4 |
| Z210031c | | | 28.2 | 92.3 |

Table 2 Relationship between Aging Temperature Factor and Maximum Stress of Conductive Rod

| Sample Number | Length of Conductive Rod Body L/mm | Diameter of Conductive Rod Body (δ/mm) | Aging Temperature °C | Stress (MPa) |
|---|---|---|---|---|
| Z210032a | 600 | 15 | 160 | 92.4 |
| Z210032b | | | 170 | 92.4 |
| Z210032c | | | 180 | 92.4 |

Table 3 Relationship between Aging Time Factor and Maximum Stress of Conductive Rod

| Sample Number | Length of Conductive Rod Body L/mm | Diameter of Conductive Rod Body (δ/mm) | Aging time h | Stress (MPa) |
|---|---|---|---|---|
| Z210033a | 600 | 15 | 8 | 92.4 |
| Z210033b | | | 10 | 92.5 |
| Z210033c | | | 12 | 92.4 |

Table 4 Relationship between Elastic Modulus Factor and Maximum Stress of Conductive Rod

| Sample Number | Length of Conductive Rod Body L/mm | Diameter of Conductive Rod Body (δ/mm) | Elastic Modulus (GPa) | Stress (MPa) |
|---|---|---|---|---|
| Z210034a | 600 | 15 | 35 | 114.4 |
| Z210034b | | | 74 | 90.9 |
| Z210034c | | | 69.9 | 92.4 |

As can be seen from Tables 1 to 4, the expansion coefficient factor, the aging temperature factor, and the aging time factor have an insignificant effect on the stress of the conductive rod 100, and the elastic modulus factor has a significant effect on the stress of the conductive rod 100, therefore, the elastic modulus factor is determined as the key factor. Meanwhile, it can be seen from Table 4 that the larger the elastic modulus of the conductive rod 100, the smaller the maximum stress value of the conductive rod 100 after vibration.

**In** an embodiment of the present disclosure, six test groups are designed by DOE, and the reliability of the above formula (1) is verified by changing the elastic modulus of the conductive rod 100 and the length of the conductive rod body 10.

The specific test method for the simulation test is that the parameters of the conductive rod 100 and the parameters of the vibration simulation test are introduced into the finite element analysis element to perform the simulation test on the conductive rod 100, wherein the working conditions of the vibration simulation test are that: the vibration time is 22 h, the vibration broadband frequency ranges from 10 Hz to 1000 Hz, the vibration power spectral density ranges from 0.2 $(m/s^2)^2$/Hz to 30 $(m/s^2)^2$/Hz, and the root mean square (RMS) of the vibration velocity is 27.8 $m/s^2$. The simulation test results are shown in Table 5, combined with FIGS. 3 to 8. FIG. 3 is the stress contour of the simulation test of the first test group disclosed in the embodiment of the present disclosure, FIG. 4 is the stress contour of the simulation test of the second test group disclosed in the embodiment of the present disclosure, FIG. 5 is the stress contour of the simulation test of the third test group disclosed in the embodiment of the present disclosure, FIG. 6 is the stress contour of the simulation test of the fourth test group disclosed in the embodiment of the present disclosure, FIG. 7 is the stress contour of the simulation test of the fifth test group disclosed in the embodiment of the present disclosure, and FIG. 8 is the stress contour of the simulation test of the sixth test group disclosed in the embodiment of the present disclosure.

Table 5 Relationship between Maximum Stress of Conductive Rod and Length, Elastic Modulus and Diameter of Conductive Rod Body

| Test Group | Length of Conductive Rod Body (L/mm) | Elastic Modulus (GPa) | Diameter of Conductive Rod Body from Formula (1) (δ/mm) | Diameter of Conductive Rod Body at Test (δ/mm) | Maximum stress (MPa) |
|---|---|---|---|---|---|
| First Test group | 600 | 74.0 | [9.84, 21.68] | 15 | 25.30 |
| Second Test group | 600 | 72.0 | [9.98, 21.95] | 21 | 13.29 |

(continued)

| Test Group | Length of Conductive Rod Body (L/mm) | Elastic Modulus (GPa) | Diameter of Conductive Rod Body from Formula (1) (δ/mm) | Diameter of Conductive Rod Body at Test (δ/mm) | Maximum stress (MPa) |
|---|---|---|---|---|---|
| Third Test group | 600 | 69.9 | [10.12, 22.24] | 11 | 50.86 |
| Fourth Test group | 600 | 74.0 | [9.84, 21.68] | 5 | 189.80 |
| Fifth Test group | 900 | 69.9 | [15.18, 32.36] | 60 | 152.58 |
| Sixth Test group | 600 | 35.0 | [14.31, 30.62] | 10 | 110.74 |

In an embodiment of the present disclosure, in the same working conditions of the vibration simulation test, as can be seen from FIG. 3, the maximum stress of the conductive rod 100 of the first test group is 25.30 MPa, as can be seen from FIG. 4, the maximum stress of the conductive rod 100 of the second test group is 13.29 MPa, as can be seen from FIG. 5, the maximum stress of the conductive rod 100 of the third test group is 50.86 MPa, as can be seen from FIG. 6, the maximum stress of the conductive rod 100 of the fourth test group is 189.80 MPa, as can be seen from FIG. 7, the maximum stress of the conductive rod 100 of the fifth test group is 152.58 MPa, and as can be seen from FIG. 8, the maximum stress of the conductive rod 100 of the sixth test group is 110.74 MPa.

In an embodiment of the present disclosure, as can be seen from Table 5, in the first, second and third test groups, during the test, the diameter of the conductive rod body falls in the diameter range of the conductive rod body obtained from the above formula (1), and in the fourth, fifth and sixth test groups, during the test, the diameter of the conductive rod body does not fall in the diameter range of the conductive rod body obtained from the above formula (1). The maximum stresses of the conductive rods 100 of the first, second and third test groups are much smaller than the maximum stresses of the conductive rods 100 of the fourth, fifth and sixth test groups.

In an embodiment of the present disclosure, the conductive rods 100 of the first, second and third test groups are processed to perform a torque attenuation test on the conductive rods 100. The working conditions of the torque attenuation test are that: the vibration time is 22 h, the vibration broadband frequency ranges from 10 Hz to 1000 Hz, the vibration power spectral density ranges from 0.2 $(m/s^2)^2/Hz$ to 30 $(m/s^2)^2/Hz$, and the root mean square (RMS) of the vibration velocity is 27.8 $m/s^2$. The method for the torque attenuation test is that: before the test, the bolt is assembled to the first connection hole 41 and the bolt is assembled to the second connection hole 51, and the conductive rod 100 is fixed by the matching of the nut and the bolt; specifically, the torque is gradually increased by a steady force by a torque wrench, when the nut or the bolt just starts to generate slight rotation, the instantaneous torque value is the largest (the static friction force needs to be overcome); continuing to rotate, the torque value will fall back to a brief stable state, and the torque value at this time is the torque value before the test; after the test, the torque is slowly applied to the nut or bolt by a torque wrench, the nut or bolt is loosened, and the instantaneous torque value at the beginning of the rotation is read and multiplied by a coefficient (generally 1.1 to 1.2) according to the test and experience to obtain the torque value after the numerical test. The torque attenuation test results are shown in Table 6.

Table 6 Torque Attenuation Test Results

| Serial number | Test Items | Test Methods | Application Position | Bolt Size | Torque Value (N·m) |
|---|---|---|---|---|---|
| 1 | Torque Test (before the test) | Screwing Method | First Connection Hole | M6 | 6.05 |
| | | | Second Connection Hole | M6 | 6.02 |
| 2 | Torque Test (after the test) | Unscrewing Method | First Connection Hole | M6 | 5.35 |
| | | | Second Connection Hole | M6 | 5.29 |

Calculated from the torque attenuation test results in Table 6:

$$\text{Attenuation value } 1=(6.05-5.35)/6.05\times100\%=11.57\%<20\% \quad (2)$$

$$\text{Attenuation value 2}=(6.02-5.29)/6.02\times100\%=12.13\%<20\% \qquad (3)$$

As can be seen from formulas (2) and (3) above, the torque of the bolt and nut fixing the first connection hole 41 is attenuated by 11.57% after the torque test, and the torque of the bolt and nut fixing the second connection hole 51 is attenuated by 12.13% after the torque test.

It will be appreciated that according to the formula (1) of the present disclosure, the ratio of the diameter, length and elastic modulus of the conductive rod 100 is in the optimal range, so that the stress in the vibrating conductive rod 100 is smaller, and the torque attenuation of the fixing assembly for fixing the conductive rod 100 is also is less than 20%. Therefore, the conductive rod 100 of the present disclosure can withstand the vibration with the broadband frequency of 10 Hz to 1000 Hz, the power spectral density of 0.2 $(m/s^2)^2$/Hz to 30 $(m/s^2)^2$/Hz, and the root mean square (RMS) of the vibration velocity of 27.8 $m/s^2$ for a long time.

In summary, the embodiments of the present disclosure provide the conductive rod 100 including the conductive rod body 10, and the diameter of the conductive rod body 10 satisfies: $\mu^2 L/\sqrt{\pi E} \leq \delta \leq 2\left(1+\mu^2 L/\sqrt{\pi E}\right)$. Wherein $\delta$ is the diameter of the conductive rod body 10, and the unit thereof is mm; L is the length of the conductive rod body 10, and the unit thereof is mm; E is the elastic modulus of the conductive rod body 10, and the unit thereof is Gpa; and $\mu$ is 0.5 $Gpa^{1/4}$. Therefore, the ratio of the diameter, length and elastic modulus of the conductive rod 100 is in the optimal range, so that the stress in the vibrating conductive rod 100 is smaller, and the torque attenuation of the fixing assembly for fixing the conductive rod 100 is also smaller.

It will be appreciated that the low mechanical properties of the conductive rod are also the reasons for the large stress in the conductive rod, the deformation of the conductive rod, and the severe attenuation of the fixing assembly for fixing the conductive rod. In general, the material of the conductive rod satisfies a yield strength greater than or equal to 75MPa, a tensile strength greater than or equal to 114Mpa, no cracks on the surface bent at 90 degrees, and conductivity greater than or equal to 57% IACS. However, the higher the purity of aluminum alloy, the better the conductive properties, the lower the mechanical properties. Therefore, the conductive rod with good conductive properties of the prior art has lower mechanical properties, while the conductive rod with good mechanical properties has lower conductive properties.

In an embodiment of the present disclosure, the material of the conductive rod 100 includes 0.02% to 0.85% by weight of magnesium (Mg), 0.01% to 0.41% by weight of silicon (Si), 0.01% to 0.04% by weight of boron (B), 0.01% to 0.07% by weight of iron (Fe) and 98.59% to 99.95% by weight of aluminum (Al), wherein the total weight ratio of magnesium, silicon, boron, iron and aluminum is greater than 99.9%, and the weight ratio of other elements is less than 0.1%.

In an exemplary embodiment, the material of the conductive rod 100 includes 0.02% to 0.85% by weight of magnesium (Mg), for example, 0.02%, 0.1%, 0.22%, 0.3%, 0.35%, 0.42%, 0.5%, 0.6%, 0.71%, 0.8%, 0.85%, or other values, which is not specifically limited herein. The material of the conductive rod 100 includes 0.01% to 0.41% by weight of silicon (Si), for example, 0.01%, 0.05%, 0.1%, 0.17%, 0.23%, 0.3%, 0.35%, 0.4%, 0.41%, or other values, which is not specifically limited herein. The material of the conductive rod 100 includes 0.01% to 0.04% by weight of boron (B), for example, 0.01%, 0.02%, 0.03%, 0.04%, or other values, which is not specifically limited herein. The material of the conductive rod 100 includes 0.01% to 0.07% by weight of iron (Fe), for example, 0.01%, 0.02%, 0.03%, 0.04%, 0.05%, 0.06%, 0.07%, or other values, which is not specifically limited herein. The material of the conductive rod 100 includes 98.59% to 99.95% by weight of aluminum (Al), for example, 98.59%, 98.65%, 98.77%, 98.9%, 99%, 99.13%, 99.41%, 99.55%, 99.72%, 99.95%, or other values, which is not specifically limited herein.

In an embodiment of the present disclosure, in order to verify that the material of the conductive rod 100 provided in the present disclosure has good conductive properties and mechanical properties, six groups of conductive rods made of different materials are fabricated, and the mechanical properties and conductive properties of the conductive rods are tested. The relationship between the material composition, mechanical properties, and conductive properties of the conductive rods is shown in Table 7.

Table 7 Material Composition and Mechanical Properties and Conductive Properties of Conductive Rods

<table>
<tr><td rowspan="2">Group 1</td><td>Composition /Properties</td><td colspan="3">Si %</td><td colspan="2">Fe %</td><td>B %</td><td>Mg %</td><td>Yield Strength MPa</td><td>Tensile Strength MPa</td><td>Elastic Modulus GPa</td><td>Conductivity % IACS</td></tr>
<tr><td>Parameters</td><td colspan="3">0.4</td><td colspan="2">0.06</td><td>0.04</td><td>0.1</td><td>86</td><td>208</td><td>74.0</td><td>57.2</td></tr>
<tr><td rowspan="2">Group 2</td><td>Composition /Properties</td><td colspan="3">Si %</td><td colspan="2">Fe %</td><td>B %</td><td>Mg %</td><td>Yield Strength MPa</td><td>Tensile Strength MPa</td><td>Elastic Modulus GPa</td><td>Conductivity % IACS</td></tr>
<tr><td>Parameters</td><td colspan="3">0.3</td><td colspan="2">0.05</td><td>0.03</td><td>0.4</td><td>84</td><td>180</td><td>72.0</td><td>57.8</td></tr>
<tr><td rowspan="2">Group 3</td><td>Composition /Properties</td><td colspan="3">Si %</td><td colspan="2">Fe %</td><td>B %</td><td>Mg %</td><td>Yield Strength MPa</td><td>Tensile Strength MPa</td><td>Elastic Modulus GPa</td><td>Conductivity % IACS</td></tr>
<tr><td>Parameters</td><td colspan="3">0.2</td><td colspan="2">0.04</td><td>0.02</td><td>0.85</td><td>81</td><td>152</td><td>69.9</td><td>58.1</td></tr>
<tr><td rowspan="2">Group 4</td><td>Composition /Properties</td><td>Si %</td><td>Fe %</td><td>Ni %</td><td>Zn %</td><td>B %</td><td>Ti %</td><td>Mg %</td><td>Yield Strength MPa</td><td>Tensile Strength MPa</td><td>Elastic Modulus GPa</td><td>Conductivity % IACS</td></tr>
<tr><td>Parameters</td><td>0.4</td><td>0.06</td><td>0.1</td><td>0.09</td><td>0.04</td><td>0.002</td><td>0.1</td><td>86</td><td>208</td><td>74.0</td><td>57.2</td></tr>
<tr><td rowspan="2">Group 5</td><td>Composition /Properties</td><td colspan="3">Si %</td><td colspan="2">Fe %</td><td>B %</td><td>Mg %</td><td>Yield Strength MPa</td><td>Tensile Strength MPa</td><td>Elastic Modulus GPa</td><td>Conductivity % IACS</td></tr>
<tr><td>Parameters</td><td colspan="3">0.2</td><td colspan="2">0.04</td><td>0.02</td><td>0.85</td><td>81</td><td>152</td><td>69.9</td><td>58.1</td></tr>
<tr><td rowspan="2">Group 6</td><td>Composition /Properties</td><td>Si %</td><td>Fe %</td><td>Ni %</td><td colspan="2">Cu %</td><td>Mn %</td><td>Ti %</td><td>Mg %</td><td>Al %</td><td>Other Elements %</td><td>Elastic Modulus GPa</td></tr>
<tr><td>Parameters</td><td>0.03</td><td>0.05</td><td>0.004</td><td colspan="2">0.004</td><td>0.06</td><td>0.002</td><td>0.059</td><td>99.6</td><td>0.2</td><td>35</td></tr>
</table>

As can be seen from Table 7, the weight ratio of each component in groups 1 to 4 is in the range of the weight ratio of each component of the material of the conductive rod 100 disclosed in the embodiments of the present disclosure, the mechanical properties and the conductive properties of the conductive rods of groups 1 to 4 meet the requirements. In groups 5 and 6, the weight ratio of other elements is greater than 0.1%, and the mechanical properties of the conductive rods of groups 5 and 6 do not meet the requirements. Therefore, the conductive rods 100 provided in the present disclosure have good conductive properties and mechanical properties.

It will be appreciated that Si and Fe are added to the conductive rod 100 of the present disclosure, such that the material of the conductive rod 100 includes Al3Fe and AlSiFe. Al3Fe and AlSiFe are strengthening phases that may improve the material strength. Si and Fe may improve the die casting fluidity and stickness during the formation of the conductive rod 100 (i.e., the conductive rod 100 is formed by a die casting process). However, in the die casting process, excessive addition of Si and Fe leads to a decrease in the conductivity of the material of the formed conductive rod 100, and less addition of Si and Fe leads to insufficient strength of the formed conductive rod 100, so that the Si content in the die-casting solution used to make the conductive rod 100 is less than 0.5wt%, and the Fe content is less than 0. 1wt%. The wt refers to the weight ratio.

It will be appreciated that, the conductive rod 100 of the present disclosure is made of an aluminum alloy, the conductive rod in the prior art is made of a copper alloy. The density of the conductive rod 100 of the present disclosure is 2.68 g/cm$^3$, which is only about 30% of that of the copper alloy, and the weight of the conductive rod 100 of the present disclosure is reduced by about 40% compared to the weight of the conductive rod in the prior art. At the same time, the cost of the conductive rod 100 of the present disclosure is only about 50% of that of the copper alloy conductive rod, a lightweight design is achieved, the energy consumption of the vehicle loaded with the conductive rod 100 is reduced, and the driving mileage of the vehicle is improved.

In an exemplary embodiment, the material of the conductive rod 100 is strengthened by alloying treatment and heat treatment, the strength of the material is more than the strength of pure aluminum.

In an exemplary embodiment, the material of the conductive rod 100 of the first test group is the same as the material of the conductive rod 100 of group 1, such that the elastic modulus of the conductive rod 100 of the first test group is the same as the elastic modulus of the conductive rod 100 of group 1. The material of the conductive rod 100 of the second test group is the same as the material of the conductive rod 100 of group 2, such that the elastic modulus of the conductive rod 100 of the second test group is the same as the elastic modulus of the conductive rod 100 of group 2. The material of the conductive rod 100 of the third test group is the same as the material of the conductive rod 100 of group 3, such that the elastic modulus of the conductive rod 100 of the third test group is the same as the elastic modulus of the conductive rod 100 of group 3. The material of the conductive rod 100 of the fourth test group is the same as the material of the conductive rod 100 of group 4, such that the elastic modulus of the conductive rod 100 of the fourth test group is the same as the elastic modulus of the conductive rod 100 of group 4. The material of the conductive rod 100 of the fifth test group is the same as the material of the conductive rod 100 of group 5, such that the elastic modulus of the conductive rod 100 of the fifth test group is the same as the elastic modulus of the conductive rod 100 of group 5. The material of the conductive rod 100 of the sixth test group is the same as the material of the conductive rod 100 of group 6, such that the elastic modulus of the conductive rod 100 of the sixth test group is the same as the elastic modulus of the conductive rods 100 of group 6.

In another embodiment of the present disclosure, referring to FIG. 9, FIG. 9 is the schematic top view of the second structure of the conductive rod disclosed in the embodiment of the present disclosure. The conductive rod 100a of the second embodiment differs from the conductive rod 100 of the first embodiment in that the conductive rod body 10 of the conductive rod 100a includes a plurality of conductive sections 11 and at least one bending section 13.

In particular, in the embodiment, the conductive rod body 10 includes a plurality of conductive sections 11 and at least one bending section 13, and the at least one bending section 13 is alternately connected with the plurality of conductive sections 11 in sequence.

In an exemplary embodiment, when the number of the bending section 13 is one, the number of the conductive sections 11 is two, and the bending section 13 is connected between two conductive sections 11; when the number of the bending sections 13 is a plurality, the plurality of bending sections 13 are alternately connected with the plurality of conductive sections 11 in sequence.

It will be appreciated that in practical applications, since the plurality of electrical devices are not completely in a straight line and the conductive rod is not completely straight, the conductive rod body 10 includes a plurality of conductive sections 11 which are distributed at different angles in the application space. If two conductive sections 11 are directly connected, an increased stress concentration occurs at the connection between the two conductive sections 11. Therefore, in order to reduce the stress concentration at the connection between the two conductive sections 11, the bending section 13 with an overall shape of an arc-shaped cylinder is set between the two conductive sections 11, so that the angle at the connection between the two conductive sections 11 changes moderately, and the stress concentration is avoided.

In an exemplary embodiment, the angle between two conductive sections 11 may range from 35 degrees to 145 degrees, for example, 35 degrees, 45 degrees, 56 degrees, 60 degrees, 69 degrees, 80 degrees, 90 degrees, 100 degrees, 120 degrees, 136 degrees, 145 degrees, or other values, which is not specifically limited herein.

In an exemplary embodiment, the bending section 13 can be circular arc section, and the corresponding radius of the circular arc of the bending section 13 can be half of the diameter of the conductive rod body 10.

In an exemplary embodiment, the number of the bending sections 13 and the number of conductive sections 11 can be determined according to number of the bending of the conductive rod 100a. Further, the number of the bending of the conductive rod 100a is consistent with the number of the bending sections 13, and the number of the conductive sections 11 is one more than the number of the bending sections 13.

In an exemplary embodiment, the first transition section 20 includes a plurality of conductive sections 11 and at least one bending section 13, or, the second transition section 30 includes a plurality of conductive sections 11 and at least one bending section 13, or, the first connection section 40 includes a plurality of conductive sections 11 and at least one bending section 13, or, the second connection section 50 includes a plurality of conductive sections 11 and at least one bending section 13. That is, the bending of the conductive rod 100a may also be at the first transition section 20, the second transition section 30, the first connection section 40 or the second connection section 50, which is not specifically limited herein.

In another embodiment of the present disclosure, referring to FIGS. 10 and 11, FIG. 10 is the schematic top view of the third structure of the conductive rod disclosed in the embodiment of the present disclosure, and FIG. 11 is the schematic cross-sectional view of the conductive rod in FIG. 10 in the XI-XI direction. The conductive rod 100b of the third embodiment differs from the conductive rod 100 of the first embodiment in that the conductive rod 100b further includes a bonding layer 70, a strengthening layer 80, an insulating layer 90 and a shielding layer 110.

In an embodiment of the present disclosure, referring to FIGS. 10 and 11, the conductive rod 100b further includes the bonding layer 70 and the strengthening layer 80, the bonding layer 70 is arranged on the surface of the conductive rod body 10, the surface of the first transition section 20, the surface of the second transition section 30, the surface of the first connection section 40 and the surface of the second connection section 50. The bonding layer 70 is sleeved on the conductive rod body 10, the first transition section 20, the second transition section 30, the first connection section 40, and the second connection section 50. The strengthening layer 80 is arranged on the outer surface of the bonding layer 70, and the first connection hole 41 and the second connection hole 51 are exposed from the strengthening layer 80. The bonding layer 70 is configured to bond the conductive rod body 10 with the strengthening layer 80, the first transition section 20 with the strengthening layer 80, the second transition section 30 with the strengthening layer 80, the first connection section 40 with the strengthening layer 80 and the second connection section 50 with the strengthening layer 80, and the strengthening layer 80 is configured to resist stress.

In an exemplary embodiment, the first positioning hole 43 and the second positioning hole 53 are exposed from the bonding layer 70 and the strengthening layer 80.

In an exemplary embodiment, the bonding layer 70 is connected to the surface of the conductive rod body 10, the surface of the first transition section 20, the surface of the second transition section 30, the surface of the first connection section 40, and the surface of the second connection section 50. The strengthening layer 80 can be connected to the outer surface of the bonding layer 70.

In an exemplary embodiment, the bonding layer 70 can be formed by an electroplating or chemical plating process. Specifically, in the electroplating process, metal ions with a positive valence are reduced to metal atoms, the metal atoms are adsorbed on the surface of the conductive rod body 10, the surface of the first transition section 20, the surface of the second transition section 30, the surface of the first connection section 40 and the surface of the second connection section 50, and migrate to the depth of the surface of the conductive rod body 10, the depth of the surface of the first transition section 20, the depth of the surface of the second transition section 30, the depth of the surface of the first connection section 40 and the depth of the surface of the second connection section 50, until incorporated within the crystal lattice of the conductive rod body 10, the first transition section 20, the second transition section 30, the first connection section 40 and the second connection section 50, to form the bonding layer 70. It will be appreciated that the bonding layer 70 formed by electroplating is relatively flat, and covers the surface of the conductive rod body 10, the surface of the first transition section 20, the surface of the second transition section 30, the surface of the first connection section 40 and the surface of the second connection section 50. The surface of the bonding layer 70 has good bonding force and adhesion to avoid the detachment of the bonding layer 70 from the conductive rod body 10, the first transition section 20, the second transition section 30, the first connection section 40 and the second connection section 50, as well as the detachment of the strengthening layer 80 from the bonding layer 70. The strengthening layer 80 can be formed through a coating process.

In an exemplary embodiment, the surface roughness Ra of outer surface of strengthening layer 80 is less than or equal to 1.6. It will be appreciated that the lower the surface roughness, the higher the fatigue strength.

In an exemplary embodiment, the Vickers hardness HV of the strengthening layer 80 is greater than 38 to increase the fatigue resistance of the strengthening layer 80.

In the embodiments of the present disclosure, after the strengthening layer 80 is formed, the surface strengthening treatment can be carried out on the strengthening layer 80 to generate a compressive stress on the surface and improve the fatigue resistance. In particular, a large number of high-speed, continuous projectiles are sprayed onto the strengthening layer 80 to beat the strengthening layer 80 and form pits on the surface of the strengthening layer 80. Strong plastic deformation occurs in the area near the pits to form a plastic deformation layer with a certain thickness. In the plastic deformation layer, the microstructure of the strengthening layer 80 changes, and the phenomena of grain refinement, dislocation density increase, and microscopic distortion increase appear, so that sub-grains are formed in the plastic deformation layer, and the hardness of the strengthening layer 80 is increased. By repeatedly forming a plastic deformation layer, a residual compressive stress layer is formed in the plastic deformation layer. The residual compressive stress layer can drive the cracks on the surface of the strengthening layer 80 from the surface to the sub surface, effectively reducing the tensile stress generated by external forces or moments on the surface, thereby effectively preventing and reducing the propagation speed of fatigue cracks. Meanwhile, by the surface strengthening process described above, the strengthening layer 80 has the ability to resist salt spray erosion, and has the ability to resist impact in an environment with a humidity of 85% and a low temperature of -40 °C, and the strengthening layer 80 has excellent conductive properties and abrasion-resistant surface layer.

In an exemplary embodiment, the material of the bonding layer 70 includes copper and the material of the strengthening layer 80 includes nickel.

In an exemplary embodiment, the thickness of the strengthening layer 80 can be 10 um, and the peel strength of the strengthening layer 80 is 35 N/mm.

In the embodiments of the present disclosure, as shown in FIG. 11, the conductive rod 100b further includes an insulating layer 90, the insulating layer 90 is arranged on the partial peripheral side of the strengthening layer 80, the insulating layer 90 is exposed from the area where the first connection hole 41 is located and the insulating layer 90 is exposed from the area where the second connection hole 51 is located. That is, the area where the first connection hole 41 is located is not wrapped by the insulating layer 90, and the area where the second connection hole 51 is located is not wrapped by the insulating layer 90. The insulating layer 90 isolates the partial peripheral side of the strengthening layer 80. In an exemplary embodiment, the insulating layer 90 can be formed by a spray coating process, an extrusion process, or a dip molding process.

In an exemplary embodiment, the material of the insulating layer 90 can be epoxy resin.

In an exemplary embodiment, the thickness of the insulating layer 90 can be 0.3 mm to 0.9 mm, for example, 0.3 mm, 0.4 mm, 0.5 mm, 0.6 mm, 0.7 mm, 0.8 mm, 0.9 mm, or other values, which is not specifically limited herein.

In an exemplary embodiment, the electrical resistance of the insulating layer 90 is greater than 200 mΩ (megohms). The insulating layer 90 can insulate an alternating current of 3000 V, and under the condition of insulating the alternating current of 3000 V, the leakage current within 60 seconds is less than 3 mA (milliampere). The insulating layer 90 can also insulate a direct current of 1000V.

In an embodiment of the present disclosure, as shown in FIG. 11, the conductive rod 100b further includes a shielding layer 110, the shielding layer 110 is arranged on the peripheral side of the insulating layer 90 and connected to the insulating layer 90. The shielding layer 110 is configured to shield the magnetic field.

It will be appreciated that the current passing through the conductive rod 100b is relatively large, and the conductive rod 100b is prone to generate eddy currents which will further generate a magnetic field and affect the normal operation of other conductive rods 100b or electrical devices. Therefore, the shielding layer 110 can shield the magnetic field generated inside the conductive rod 10b and shield the external magnetic field.

In an exemplary embodiment, the area where the first positioning hole 43 is located and the area where the second positioning hole 53 is located are wrapped by the insulating layer 90 and the shielding layer 110, and the first positioning hole 43 and the second positioning hole 53 are exposed from the insulating layer 90 and the shielding layer 110, or the area where the first positioning hole 43 is located and the area where the second positioning hole 53 is located are not wrapped by the insulating layer 90 and the shielding layer 110, which is not specifically limited herein.

In an exemplary embodiment, a spray code is arranged on the surface of the conductive rod 100b, and the spray code is configured to record the information such as the manufacturing information and performance information of the conductive rod 100b.

In summary, the embodiment of the present disclosure provides the conductive rod 100 (100a, 100b) including the conductive rod body 10, and the diameter of the conductive rod body 10 satisfies: $\mu^2 L/\sqrt{\pi E} \leq \delta \leq 2\left(1 + \mu^2 L/\sqrt{\pi E}\right)$, wherein δ is the diameter of the conductive rod body 10, and the unit thereof is mm; L is the length of the conductive rod body 10, and the unit thereof is mm; E is the elastic modulus of the conductive rod body 10, and the unit thereof is Gpa; and μ is 0.5 Gpa$^{1/4}$. Therefore, the ratio of the diameter, length and elastic modulus of the conductive rod is in the optimal range, so that the stress in the vibrating conductive rod is smaller, and the torque attenuation of the fixing assembly for fixing the conductive rod is also smaller, and the conductive rod meets long-term vibration working conditions while avoiding detachment or breakage due to vibration during operation. It ensures that the conductive rod assembly formed by the conductive rod is reliable and durable, and further ensures that the vehicle has a longer driving mileage on the actual road condition.

Based on the same inventive concept, an embodiment of the present disclosure also provides a conductive rod assembly, referring to FIG. 12, and FIG. 12 is the structure diagram of the conductive rod assembly disclosed in the embodiment of the present disclosure. A conductive rod assembly 300 according to an embodiment of the present disclosure includes a connection structure 200 and a plurality of conductive rods 100 (100a, 100b) as described above, and the plurality of conductive rods 100 (100a, 100b) are fixed to the connection structure 200. Since the embodiments shown in FIGS. 1 to 11 has already described the conductive rod in detail, it will not be repeated here.

In an exemplary embodiment, the connection structure 200 can be an insulator, and the plurality of conductive rods are spaced apart from each other on the connection structure 200.

In an exemplary embodiment, through the cooperation of the positioning hole of the conductive rod with the fixing assembly to fix the conductive rods 100 (100a, 100b) to the different electrical devices.

In an exemplary embodiment, the positioning hole can be arranged in the area where the conductive rod body 10 is located, the area where the first transition section 20 is located, the area where the second transition section 30 is located, the area where the first connection section 40 is located, or the area where the second connection section 50 is located, which is not specifically limited herein.

In an exemplary embodiment, the single conductive rod 100 (100a, 100b) can be placed horizontally, vertically or at any angle. The plurality of conductive rods 100 (100a, 100b) can be placed horizontally, vertically or at any angle between each other, so that the plurality of conductive rods 100 (100a, 100b) form a multi-layer spatial three-dimensional layout in space, and the conductive rods 100 (100a, 100b) can be extended and distributed outward by various combinations, so that the conductive rod assembly 300 has the advantages of compact structure, high space utilization rate and more convenient use.

In an exemplary embodiment, the plurality of the conductive rods 100 (100a, 100b) can be connected in series or in parallel with each other, which is not specifically limited herein. The plurality of the conductive rods 100 (100a, 100b) can be arranged in a single layer or in multiple layers, which is not specifically limited herein. The plurality of the conductive rods 100 (100a, 100b) can be connected with one or more of the connection structures 200.

In an exemplary embodiment, the conductive rods 100 (100a, 100b) can be connected with the connection structure 200 by retaining rings.

In summary, the embodiment of the present disclosure provides the conductive rod assembly 300 including the connection structure 200 and a plurality of the conductive rod, the conductive rods 100 (100a, 100b) include the conductive rod body 10, and the diameter of the conductive rod body 10 satisfies: $\mu^2 L/\sqrt{\pi E} \leq \delta \leq 2\left(1 + \mu^2 L/\sqrt{\pi E}\right)$, wherein $\delta$ is the diameter of the conductive rod body 10, and the unit thereof is mm; L is the length of the conductive rod body 10, and the unit thereof is mm; E is the elastic modulus of the conductive rod body 10, and the unit thereof is Gpa; and $\mu$ is 0.5 $Gpa^{1/4}$. Therefore, the ratio of the diameter, length and elastic modulus of the conductive rod is in the optimal range, so that the stress in the vibrating conductive rod is smaller, and the torque attenuation of the fixing assembly for fixing the conductive rod is also smaller.

Based on the same inventive concept, an embodiment of the present disclosure also provides an electrical system, referring to FIG. 13, and FIG. 13 is the structure diagram of the electrical system disclosed in the embodiment of the present disclosure. An electrical system 500 according to an embodiment of the present disclosure includes a plurality of electrical devices 400 and at least one of the conductive rod assemblies 300 described above, and the two ends of the conductive rod of the conductive rod assembly 300 are fixed to the different electrical devices 400 and electrically connected to transmit the electrical current.

In an exemplary embodiment, the electrical device 400 includes, but is not limited to, a battery pack, a transformer, a motor, a circuit breaker, an AC/DC converter, a switch cabinet, a capacitor, and a charging pile, and the like, which is not specifically limited herein.

In an exemplary embodiment, the electrical device 400 can be fixed to the connection structure 200.

In summary, the embodiment of the present disclosure provides the electrical system 500 including the electrical device 400 and the conductive rod assembly 300, the conductive rod assembly 300 includes the connection structure 200 and a plurality of the conductive rods, the conductive rods 100 (100a, 100b) includes the conductive rod body 10, and the diameter of the conductive rod body 10 satisfies: $\mu^2 L/\sqrt{\pi E} \leq \delta \leq 2\left(1 + \mu^2 L/\sqrt{\pi E}\right)$, wherein $\delta$ is the diameter of the conductive rod body 10, and the unit thereof is mm; L is the length of the conductive rod body 10, and the unit thereof is mm; E is the elastic modulus of the conductive rod body 10, and the unit thereof is Gpa; and $\mu$ is 0.5 $Gpa^{1/4}$. Therefore, the ratio of the diameter, length and elastic modulus of the conductive rod is in the optimal range, so that the stress in the vibrating conductive rod is smaller, and the torque attenuation of the fixing assembly for fixing the conductive rod is also smaller.

Based on the same inventive concept, an embodiment of the present disclosure also provides a vehicle, and FIG. 14 is the structure diagram of the vehicle disclosed in the embodiment of the present disclosure. A vehicle 800 according to an embodiment of the present disclosure includes a vehicle body 700 and the electrical system 500 described above, and the electrical system 500 is located in the vehicle body 700.

In an example embodiment, the vehicle 800 can be new energy vehicle.

In summary, the embodiment of the present disclosure provides the vehicle 800 including the vehicle body 700 and the electrical system 500, the electrical system 500 includes the electrical device 400 and the conductive rod assembly 300, the conductive rods assembly 300 includes the connection structure 200 and a plurality of the conductive rods, the conductive rod 100 (100a, 100b) include the conductive rod body 10, and the diameter of the conductive rod body 10 satisfies: $\mu^2 L/\sqrt{\pi E} \leq \delta \leq 2(1 + \mu^2 L/\sqrt{\pi E})$, wherein δ is the diameter of the conductive rod body 10, and the unit thereof is mm; L is the length of the conductive rod body 10, and the unit thereof is mm; E is the elastic modulus of the conductive rod body 10, and the unit thereof is Gpa; and μ is 0.5 $Gpa^{1/4}$. Therefore, the ratio of the diameter, length and elastic modulus of the conductive rod is in the optimal range, so that the stress in the vibrating conductive rod is smaller, and the torque attenuation of the fixing assembly for fixing the conductive rod is also smaller. Moreover, the conductive rod applied to the vehicle 800 can improve the electrical energy conversion efficiency and power density of the vehicle, and make the electrical system 500 more compact and lighter in weight. Even when the vehicle 800 travels more than 200,000 kilometers, the performance of the conductive rod does not deteriorate.

In the description of the present disclosure, descriptions with reference to the terms "one embodiment", "some embodiments", "an exemplary embodiment", "example", "specific example" or "some examples" etc. mean that the specific features, structures, materials, or characteristics described in connection with the embodiment or example is included in at least one embodiment or example of the present disclosure. In the present disclosure, the illustrative expressions of the above terms may not necessarily refer to the same embodiment or example. Moreover, the specific features, structures, materials, or characteristics described can be combined in any one or more embodiments or examples in a suitable manner.

It will be appreciated that the application of the present disclosure is not limited to the embodiments described above, for a person skilled in the art, improvements and modifications can be made according to the above description, and all improvements and modifications are intended to fall within the scope of the appended claims. A person skilled in the art will understand that all or part of the methods of implementing the embodiments described above and equivalent changes according to the appended claims are intended to fall within the scope of the disclosure.

## Claims

1. A conductive rod, comprising a conductive rod body (10), the diameter of the conductive rod body satisfying:

$$\mu^2 L/\sqrt{\pi E} \leq \delta \leq 2(1 + \mu^2 L/\sqrt{\pi E})$$

wherein δ is the diameter of the conductive rod body (10), and the unit thereof is mm; L is the length of the conductive rod body (10), and the unit thereof is mm; E is the elastic modulus of the conductive rod body (10), and the unit thereof is Gpa; and μ is 0.5 $Gpa^{1/4}$.

2. The conductive rod according to claim 1, the conductive rod further comprising a first transition section (20), a second transition section (30), a first connection section (40) and a second connection section (50), the first transition section (20) and the second transition section (30) are respectively connected to the opposite ends of the conductive rod body (10), the first connection section (40) is connected to the end of the first transition section (20) facing away from the conductive rod body (10) and the second connection section (50) is connected to the end of the second transition section (30) facing away from the conductive rod body (10);
the cross-sectional area of the first transition section (20) is between the cross-sectional area of the first connection section (40) and the cross-sectional area of the conductive rod body (10), and the cross-sectional area of the second transition section (30) is between the cross-sectional area of the second connection section (50) and the cross-sectional area of the conductive rod body (10).

3. The conductive rod according to claim 2, wherein a first connection hole (41) is arranged in the end of the first connection section (40) facing away from the first transition section (20), a second connection hole (51) is arranged in the end of the second connection section (50) facing away from the second transition section (30), the first connection hole (41) is configured to fix the first connection section (40) to an electrical device and the second connection hole (51) is configured to fix the second connection section (50) to another electrical device.

**4.** The conductive rod according to claim 2 or 3, wherein the end surface of the first connection section (40) facing away from the first transition section (20) is a curved surface and the end surface of the second connection section (50) facing away from the second transition section (30) is a curved surface.

**5.** The conductive rod according to any one of claims 2 to 4, wherein a first positioning hole (43) is arranged in the first connection section (40), a second positioning hole (53) is arranged in the second connection section (50), the first positioning hole (43) is configured to position the first connection section (40) with an electrical device and the second positioning hole (53) is configured to position the second connection section (50) with another electrical device.

**6.** The conductive rod according to any one of claims 2 to 5, wherein the conductive rod body (10), the first transition section (20), the second transition section (30), the first connection section (40) and second connection section (50) are integrally formed.

**7.** The conductive rod according to any one of claims 3 to 5, the conductive rod further compriseing a bonding layer (70) and a strengthening layer (80), the bonding layer (70) is arranged on the surface of the conductive rod body (10), the surface of the first transition section (20), the surface of the second transition section (30), the surface of the first connection section (40) and the surface of the second connection section (50), the strengthening layer (80) is arranged on the outer surface of the bonding layer (70), and the bonding layer (70) is configured to bond the conductive rod body (10) with the strengthening layer (80), the first transition section (20) with the strengthening layer (80), the second transition section (30) with the strengthening layer (80), the first connection section (40) with the strengthening layer (80) and the second connection section (50) with the strengthening layer (80).

**8.** The conductive rod according to claim 7, wherein the bonding layer (70) and the strengthening layer (80) are exposed through the first positioning hole (43) and the second positioning hole (53).

**9.** The conductive rod according to claim 7 or 8, wherein the surface roughness of the outer surface of the strengthening layer (80) is less than or equal to 1.6 and the Vickers hardness of the strengthening layer (80) is greater than 38.

**10.** The conductive rod according to any one of claims 7 to 9, the conductive rod further comprising an insulating layer, the insulating layer (90) is arranged on the partial peripheral side of the strengthening layer (80), the insulating layer (90) is exposed from the area where the first connection hole (41) is located and the insulating layer (90) is exposed from the area where the second connection hole (51) is located.

**11.** The conductive rod according to claim 10, the conductive rod further comprising a shielding layer (110), the shielding layer (110) is arranged on the peripheral side of the insulating layer (90), and the shielding layer (110) is configured to shield a magnetic field.

**12.** The conductive rod according to any one of claims 1 to 11, wherein the conductive rod body (10) comprises a plurality of conductive sections (11) and at least one bending section (13), and the at least one bending section (13) is alternately connected with the plurality of conductive sections (11) in sequence.

**13.** The conductive rod according to any one of claims 1 to 12, wherein the material of the conductive rod comprises 0.02 to 0.85% by weight of magnesium, 0.01 to 0.41% by weight of silicon, 0.01 to 0.04% by weight of boron, 0.01 to 0.07% by weight of iron and 98.59 to 99.95% by weight of aluminum.

**14.** The conductive rod according to claim 13, wherein the total weight ratio of magnesium, silicon, boron, iron and aluminum is greater than 99.9%.

**15.** The conductive rod according to any one of claims 1 to 12, wherein the material of the conductive rod comprises Al3Fe and AlSiFe.

**16.** The conductive rod according to any one of claims 1 to 15, wherein $\mu^2 L/\sqrt{\pi E} \leq \delta \leq 2\left(1 + \mu^2 L/\sqrt{\pi E}\right)$ is obtained on the basis of a Design of Experiments.

**17.** The conductive rod according to any one of claims 1 to 16, wherein the elastic modulus of the conductive rod body (10) ranges from 55 Gpa to 120 Gpa.

**18.** A conductive rod assembly (300), comprising a connection structure and a plurality of the conductive rods according to any one of claims 1 to 17, the plurality of conductive rods being fixed to the connection structure.

**19.** An electrical system (500), comprising a plurality of electrical devices (400) and at least one conductive rod assembly (300) according to claim 18, two ends of the conductive rod of the conductive rod assembly (300) being fixed to the different electrical devices and electrically connected respectively.

**20.** A vehicle (800), comprising a vehicle body (700) and the electrical system (500) according to claim 19, the electrical system (500) being located in the vehicle body (700).

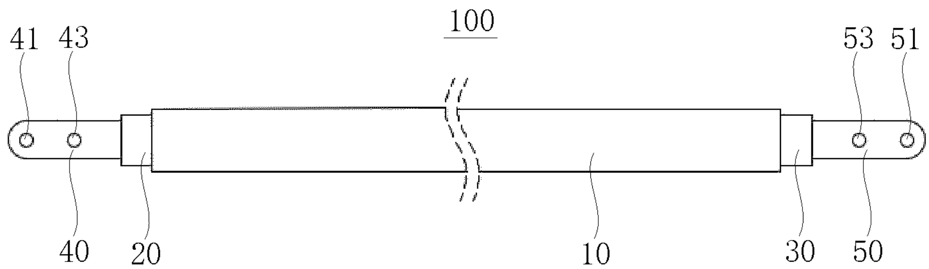


FIG.1

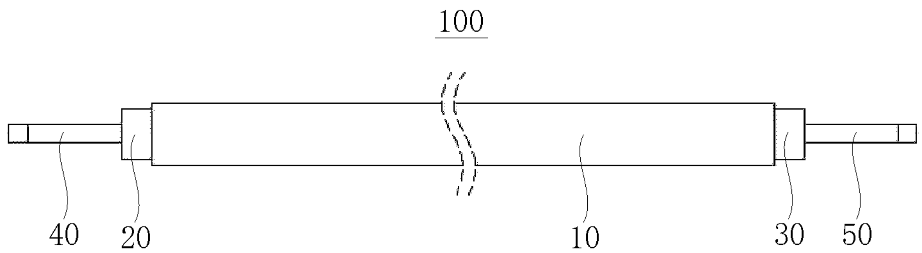


FIG.2

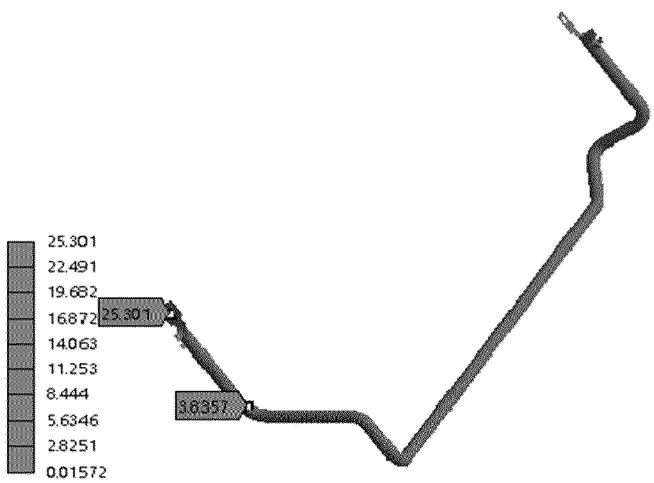


FIG.3

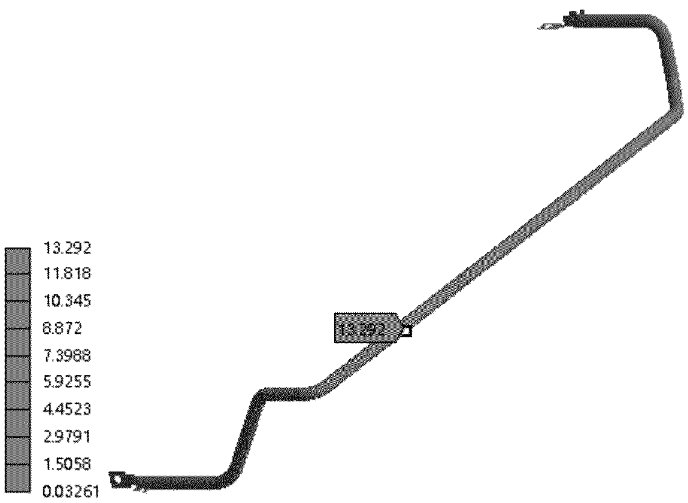


FIG.4

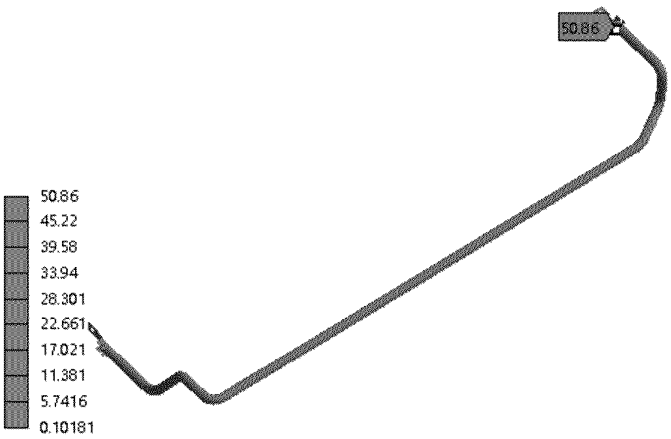


FIG.5

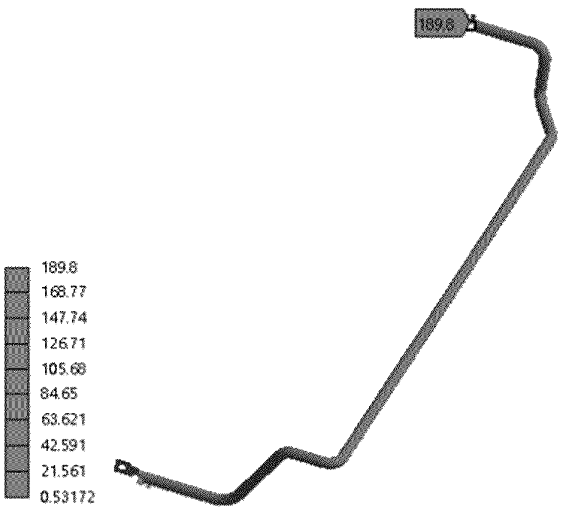


FIG.6

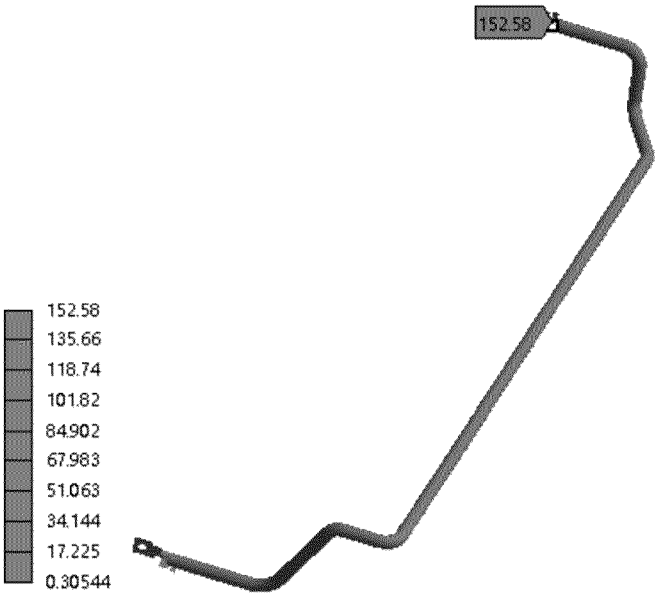
152.58
152.58
135.66
118.74
101.82
84.902
67.983
51.063
34.144
17.225
0.30544

FIG.7

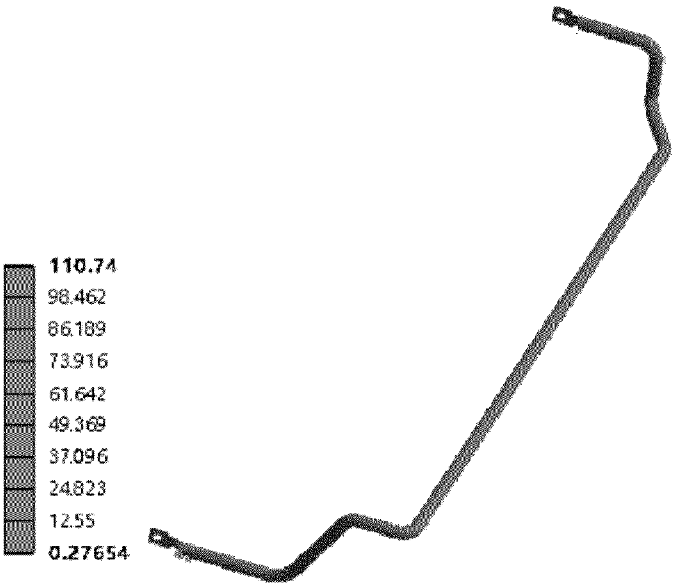
110.74
98.462
86.189
73.916
61.642
49.369
37.096
24.823
12.55
0.27654

FIG.8

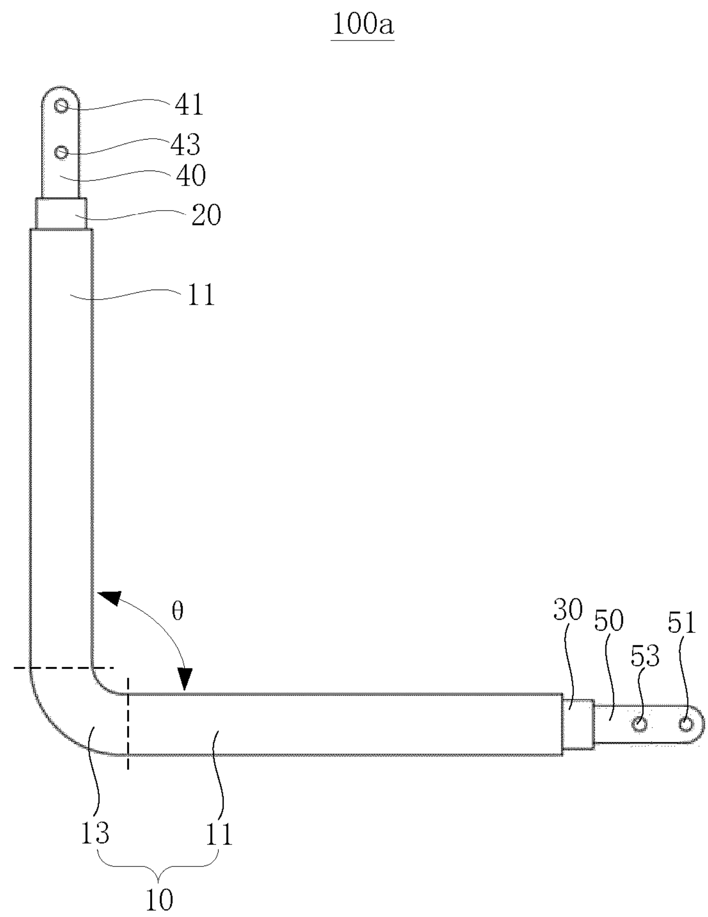
100a
41
43
40
20
11
θ
30
50
51
53
13
11
10

FIG.9

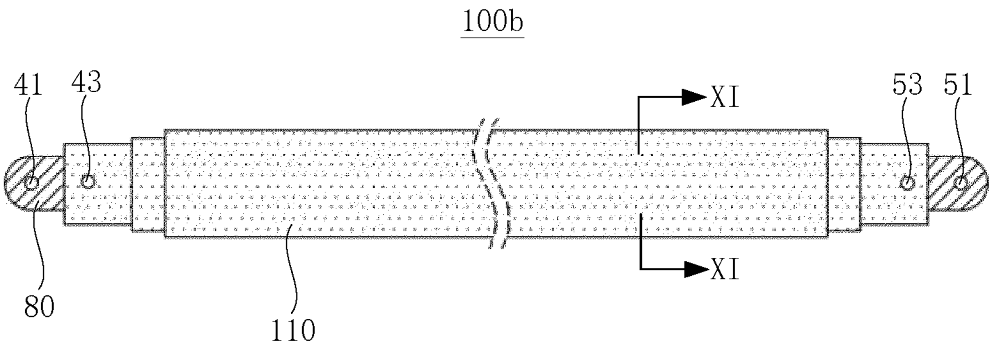
100b
41
43
XI
53
51
XI
80
110

FIG.10

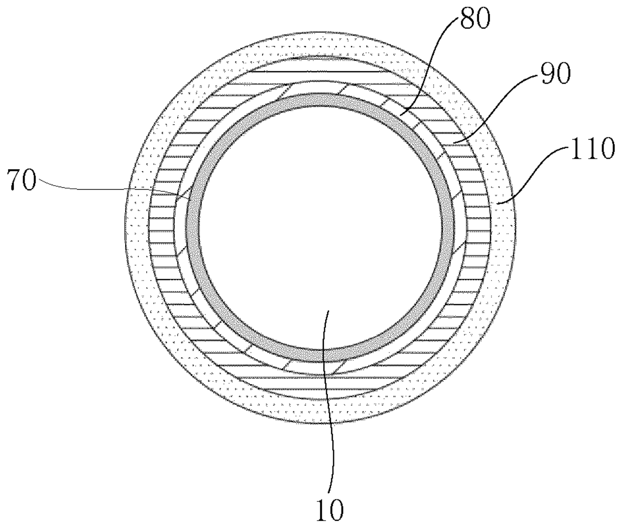


FIG.11

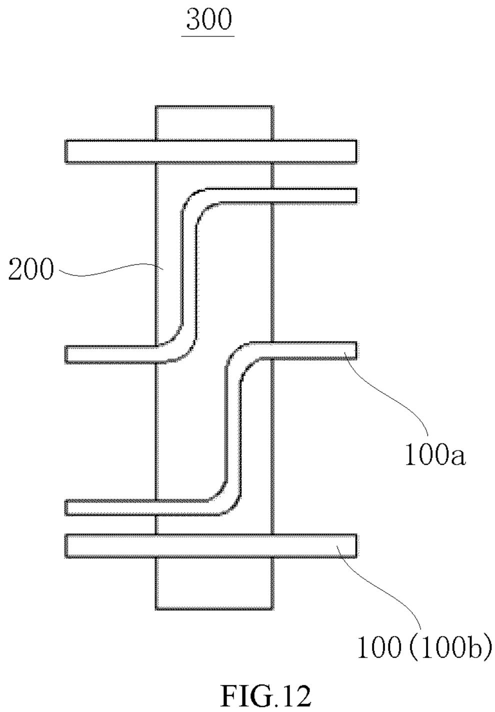


FIG.12

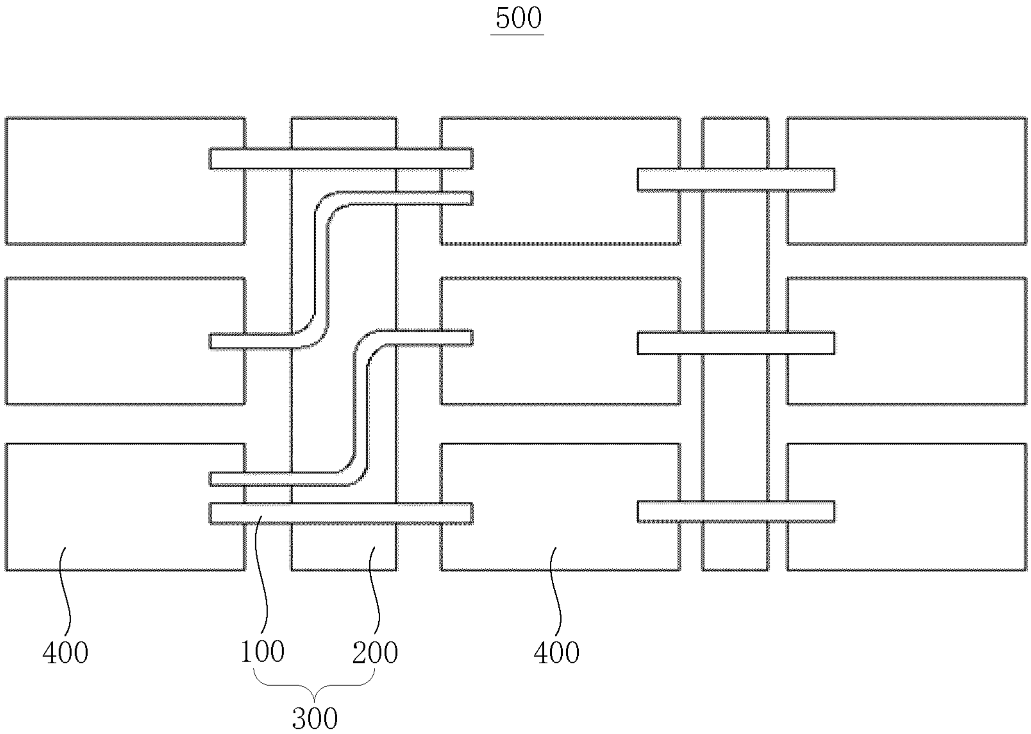


FIG.13

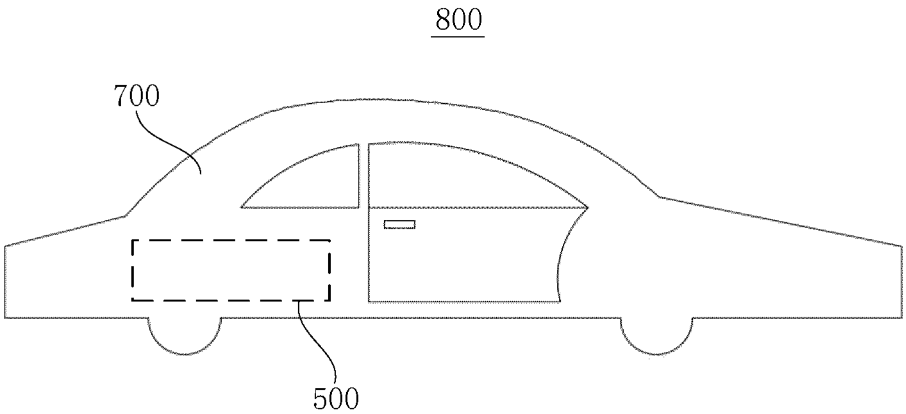


FIG.14

**INTERNATIONAL SEARCH REPORT**

International application No.
**PCT/CN2023/142267**

**A. CLASSIFICATION OF SUBJECT MATTER**

H01R 25/16(2006.01)i; H01R 31/08(2006.01)i; H01B 5/02(2006.01)i

According to International Patent Classification (IPC) or to both national classification and IPC

**B. FIELDS SEARCHED**

Minimum documentation searched (classification system followed by classification symbols)

IPC:H01R, H01B

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 导电杆, 导电条, 导电体, 本体, 过渡段, 直径, conductive bar, conductor, main body, conical section, diameter

**C. DOCUMENTS CONSIDERED TO BE RELEVANT**

| Category* | Citation of document, with indication, where appropriate, of the relevant passages | Relevant to claim No. |
|---|---|---|
| A | CN 211460496 U (CATHAY MANUFACTURING CORP.) 11 September 2020 (2020-09-11) description, paragraphs 27-41, and figures 1-2 | 1-20 |
| A | CN 214253965 U (BYD CO., LTD.) 21 September 2021 (2021-09-21) entire document | 1-20 |
| A | CN 212209907 U (PANYU DEYI PRECISION ELECTRONIC INDUSTRY CO., LTD.) 22 December 2020 (2020-12-22) entire document | 1-20 |
| A | CN 213958973 U (SUZHOU CSI SOLAR POWER TECHNOLOGY CO., LTD. et al.) 13 August 2021 (2021-08-13) entire document | 1-20 |
| A | DE 102011015825 A1 (INTERCABLE GMBH) 04 October 2012 (2012-10-04) entire document | 1-20 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 March 2024** | **25 March 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/142267**

| Patent document cited in search report | | | Publication date (day/month/year) | Patent family member(s) | Publication date (day/month/year) |
|---|---|---|---|---|---|
| CN | 211460496 | U | 11 September 2020 | None | |
| CN | 214253965 | U | 21 September 2021 | None | |
| CN | 212209907 | U | 22 December 2020 | None | |
| CN | 213958973 | U | 13 August 2021 | None | |
| DE | 102011015825 | A1 | 04 October 2012 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202211730874